# EUROPEAN PATENT APPLICATION

(11) **EP 1 832 869 A1**
(43) Date of publication of application: **12.09.2007**
(21) Application number: 06004892.3
(22) Date of filing: 10.03.2006
(51) Int. Cl.: G01N 27/22, G01N 21/55

(54) **Sensor device and method of operating a sensor device**

(71) Applicant: Valeo Schalter und Sensoren GmbH, 74321 Bietigheim-Bissingen (DE); GLAVERBEL, 6040 Jumet (BE)
(72) Inventor: Nies, Jürgen, 75181 Pforzheim (DE); Schuler, Thomas, 75446 Wiernsheim (DE); Delatte, Yves, 1495 Villers-La-Ville (BE)
(74) Representative: Bulling, Alexander

(57) **Abstract**

The present invention relates to a sensor device (100) for measuring a physical value which comprises a signal generator (105) for generating a first reference signal (u1) and a second reference signal (u1) that is phase shifted by 180 degrees with reference to said first reference signal, at least a first signal path (110) for transmitting said first reference signal (u1) and a second signal path (120) for transmitting said second reference signal (u2), wherein a transmission function of at least said first signal path (110) depends on said physical value, and evaluation means (130) for analysing respective transmitted reference signals (u1', u2'') obtained at an output of said first signal path (110) and said second signal path (120).

The inventive sensor device (100) is characterized by a phase shifter (140) for further influencing the phase of at least one of said reference signals (u1, u2).

## Description

The present invention relates to a sensor device for measuring a physical value which comprises a signal generator for generating a first reference signal and a second reference signal that is phase shifted by 180 degrees with reference to said first reference signal, at least a first signal path for transmitting said first reference signal and a second signal path for transmitting said second reference signal, wherein a transmission function of at least said first signal path depends on said physical value, and evaluation means for analysing respective transmitted reference signals obtained at an output of said first signal path and said second signal path.

The present invention further relates to a method of operating a sensor device according to the preamble of claim 10.

Sensor devices and methods of the aforementioned type are known from prior art, particularly from capacitive rain sensors used in motor vehicles.

A well-known measurement principle employing the above-mentioned features is the so-called high ambient light independent system (HALIOS) principle, wherein optical transmission sections are used as signal paths for transmitting said reference signals.

According to said HALIOS principle, a first signal path comprises e.g. a first light emitting diode (LED) and a photo diode for sending and receiving said first reference signal, wherein properties of the optical transmission of said first reference signal within said first signal path depend on a physical value to be measured. A second signal path is established by a second light emitting diode and said photo diode. Said second signal path does not depend on the physical value to be measured.

Since both said first reference signal transmitted via said first signal path and said second reference signal transmitted via said second signal path are received by the single photo diode and thus added together, individual properties of said photo diode or a change of said properties or e.g. the ambient light level do affect reception of both reference signals and may thus be eliminated by a differential analysis. Hence only different transmission properties of said signal paths contribute to a change in an output signal being evaluated. The differential analysis is obtained with the HALIOS principle by providing reference signals that comprise a phase shift of exactly 180 degrees relative to each other. As a result, the added received reference signals yield a constant value, i.e. only a DC (direct current) value of the photo current of said photo diode, if both signal paths have the same properties. Any difference in the properties of the signal paths results in an AC (alternating current) component of said photo current that may be evaluated accordingly.

Unfortunately, not only a physical value to be measured which changes the properties of a signal path results in an AC component of the photo current, but also any other violation of symmetry between said first signal path and said second signal path, e.g. regarding a length of the respective signal line and the like. Hence it is not possible to perform precise measurements according to the HALIOS principle with prior art sensor devices unless the characteristics of both signal paths is absolutely identical, which imposes severe restrictions especially regarding the attachment of sensors and other components of said signal paths within a measurement configuration.

It is therefore an object of the present invention to improve a sensor device and a method of operating a sensor device of the above-mentioned type such that the flexibility regarding a configuration of the various signal paths used by the sensor device is increased without affecting a precision of measurement.

Regarding said sensor device, this object is achieved according to the present invention by providing a phase shifter for further influencing the phase of at least one of said reference signals.

The inventive phase shifter enables to compensate for any deviations in signal line length and the like which may introduce a phase shift that disturbs the necessary phase difference condition of 180 degrees between said transmitted reference signals.

Hence it is possible with a sensor device according to the present invention to e.g. distribute various signal paths within a measurement environment without obeying geometrical constraints that must be fulfilled by prior art sensor devices. For instance, a transmission line of the first signal path may have a first length, and a transmission line of the second signal path may have a second length which is different from said first length. The length difference and a resulting phase shift of reference signals transmitted via said signal paths may be compensated by introducing a further, opposite phase shift via the inventive phase shifter so as to obtain a phase shift of exactly 180 degrees for the received reference signals as demanded by the HALIOS principle.

According to a very advantageous embodiment of the present invention, said phase shifter comprises an RC-network which has one or more resistive elements and one or more capacitive elements.

A first, very simple variant of the inventive phase shifter provides for a constant phase shift which is chosen so as to correspond with a known, undesired phase shift resulting from different lengths of the transmission lines or other components of the signal paths.

A more sophisticated variant of the inventive phase shifter provides for at least one tuneable element such as a variable capacitor or resistor in order to dynamically influence the resulting phase shift. Such tuneable capacitive or resistive elements may e.g. be provided in form of a matrix having a plurality of elements with a constant capacity or resistance which may be interconnected via a controllable switch matrix in a plurality of different ways so as to establish different resulting capacitance or resistance values.

Apart from influencing the phase of said at least one reference signal, said inventive phase shifter may also be configured to alter an amplitude of the reference signal to account for changes in an attenuation of the reference signals.

Generally, it is also possible to employ a passive or active filter circuit as said inventive phase shifter to influence both the amplitude and the phase of said at least one reference signal.

A further possibility to implement the inventive phase shifter is given by providing a digitally controllable delay line, i.e. a device which has a microcontroller compatible interface via which a predetermined signal transmission delay may be set between an input terminal and an output terminal of said device. One example for such a programmable delay line is the DS1023 8-bit programmable timing element from Dallas Semiconductors.

Apart from using digitally controllable delay lines for implementing the inventive phase shifter, it is also possible to use controllable delay lines having an analogue interface, such as a control voltage or the like which influences the delay and hence a phase shift achieved by said device.

A combination of the above explained measures and techniques may also be employed to provide the functionality of the inventive phase shifter.

According to a further very advantageous embodiment of the present invention, said phase shifter is integrated in said signal generator which reduces the number of separate components within the inventive sensor device. In case of a controllable phase shifter, the desired phase shift may be selected via one or more control lines provided within said signal generator.

According to a further advantageous embodiment of the present invention, at least one of said signal paths comprises a capacitive element, a capacitance of which depends on said physical value. For instance, said capacitive element may comprise two electrically conductive sheets integrated in a windshield of a motor vehicle, wherein each of said conductive sheets forms an electrode of a corresponding capacitor, a resulting dielectric constant of which is influenced by rain drops falling on said windshield in the area of said capacitor. Thereby, a capacitive rain sensor is implemented within the respective signal path.

According to yet a further advantageous embodiment of the present invention, at least one of said signal paths comprises an optical transmission section which enables to provide an optical sensor device.

It is also possible to provide further components within one or more signal paths that change a transmission function of said signal path depending on a physical effect such as pressure sensitive elements or the like. Still further, it is possible to provide a combination of such components or sensors within a signal path of the inventive sensor device.

Another very advantageous embodiment of the present invention proposes that a transmission function of said second signal path does not depend on said physical value. This configuration is particularly advantageous, since it is not necessary for said second signal path to be placed in an area where it is exposed to the influence of the physical value to be measured such as raindrops falling onto a windshield of a motor vehicle. The second signal path may advantageously rather be completely integrated within an electric control unit of the inventive sensor device. Accordingly, respective signal lines for said second signal path must only be provided within said electronic control unit, e.g. on a printed circuit board of said electronic control unit in contrast to providing a comparatively long and expensive signal line.

Furthermore, with this embodiment of the present invention, other elements required for a conventional signal path such as capacitive elements or optical transmission sections need not be provided. The inventive second signal path completely integrated into said electronic control unit may rather directly lead to evaluation means of said sensor device. This configuration hence allows for applying the HALIOS principle for measurement and does not require - in the case of a capacitive rain sensor - a further capacitive element in a windshield of a motor vehicle. I.e., there is only one capacitive element to be integrated into the windshield within the first signal path. Consequently, only two signal lines instead of three or even more signal lines outside the electronic control unit are necessary for the inventive sensor device. Therefore, a corresponding production time and a reliability of said sensor device is increased.

According to a further advantageous embodiment of the present invention, the signal generator is configured to generate rectangular reference signals.

Although the HALIOS principle may also be applied to further AC signals such as purely sinusoidal or other signals which enable to define a 180 degrees phase shift, using rectangular signals is particularly beneficial since such signals may directly be obtained from a digital logic circuit such as a counter or the like. Furthermore, the generation of the second reference signal with its 180 degrees phase shift with reference to the first reference signal is very simple and may e.g. be accomplished by an inverter.

A further solution to the object of the present invention is given by a method of operating a sensor device according to claim 10. Said method of operating a sensor device for measuring a physical value, wherein a first reference signal is transmitted over a first signal path and wherein a second reference signal, which is phase shifted by 180 degrees with reference to said first reference signal, is transmitted over a second signal path, wherein a transmission function of at least said first signal path depends on said physical value and wherein respective transmitted reference signals obtained at an output of said first signal path and said signal path are analysed is characterized by further influencing the phase of at least one of said reference signals by means of a phase shifter.

I.e. apart from providing said phase difference of 180 degrees between said first reference signal and said reference signal demanded by the HALIOS principle, the inventive method gives the possibility to tune a phase shift between the reference signals and thus enables to attain the demanded 180 degrees phase shift even if any asymmetry or further factors affect signal propagation conditions of said signal paths in an undesired different manner.

Advantageously, said phase of at least one of said reference signals is influenced in order to attain a phase difference of 180 degrees between said transmitted reference signals. The transmitted reference signals are evaluated in order to obtain information related to the physical value to be measured and it is these signals which are to comprise the 180 degrees phase shift for proper application of the HALIOS principle.

According to a further advantageous variant of the present invention, a current phase shift between said transmitted reference signals is determined, in particular prior to influencing or tuning said phase difference to exactly 180 degrees. Thus, it is advantageously possible to detect any deviation from said required phase shift of 180 degrees and to provide for appropriate calibration by tuning the phase shift via the inventive phase shifter.

Further advantages and features of the present invention are described in the following detailed description with reference to the drawings in which:
- Figure 1: depicts a simplified block diagram of a first embodiment of the inventive sensor device,
- Figure 2: depicts a more detailed block diagram of evaluation means comprised within the sensor device of figure 1,
- Figure 3: depicts a simplified block diagram of a second embodiment of the inventive sensor device,
- Figure 4a and 4b: show different scenarios regarding a phase shift of reference signals, and
- Figure 5: shows a simplified flow chart according to a first embodiment of the inventive method.

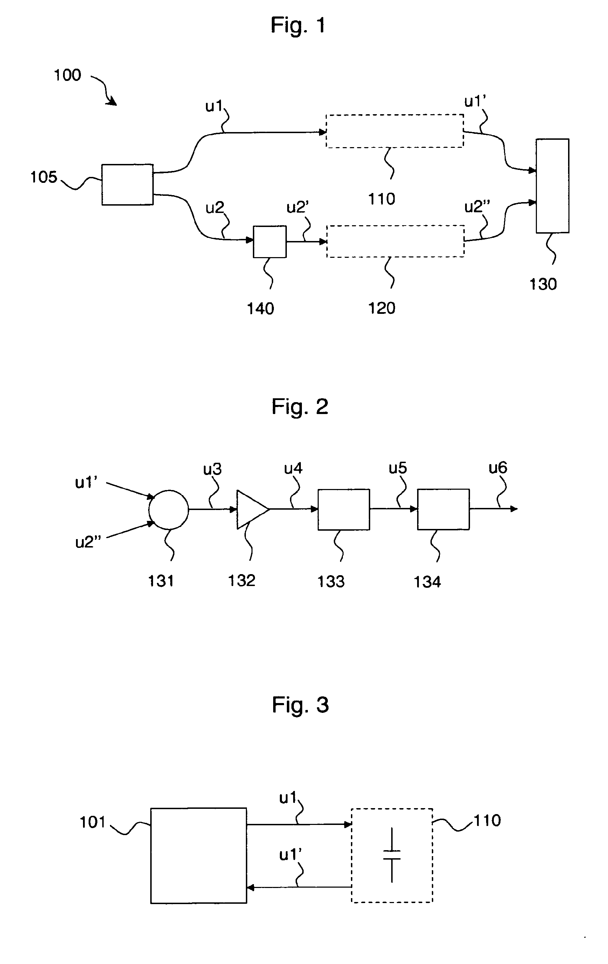

The sensor device 100 depicted in figure 1 comprises a signal generator 105 which generates a first reference signal u1 and a second reference signal u2, both of which are rectangular signals. The second reference signal u2 is phase shifted by 180 degrees with reference to said first reference signal u1. Such a second reference signal u2 may e.g. be obtained by inverting the first reference signal u1.

Furthermore, the inventive sensor device 100 comprises a first signal path 110 for transmitting said first reference signal u1. Said first signal path 110 has a transmission function which depends on a physical value to be measured by said sensor device 100. For instance, the transmission function of said first signal path 110 depends on a dielectric constant of a medium which is present on or within a physical representation of said first signal path 110.

In order to provide the functionality of a rain sensor for a motor vehicle, said sensor device 100 may e.g. comprise a first electrode and a second electrode which together form a capacitor (not shown) within said first signal path 110 and which are integrated in a windshield of the motor vehicle.

In this case, a capacitance of said capacitor depends on the amount of water, i.e. rain drops, which is located on or between said electrodes. The transmission function of said first signal path 110, in turn, depends on the capacitance of said capacitor and thereby enables to influence said first reference signal u1 transmitted over said first signal path 110 depending on the presence of rain within said capacitor.

In contrast to said first signal path 110, a second signal path 120 has a transmission function which does not depend on said physical value. Therefore, it is possible to provide said second signal path 120 without any external signal lines such as signal lines leading to a windshield of the motor vehicle or the like. The second signal path 120 may thus completely integrated in an electronic control unit of said sensor device 100.

This configuration is depicted in Figure 3. The only component external to the electronic control unit 101 of the inventive sensor device 100 (Figure 1) is the first signal path 110 with its windshield-integrated capacitor and respective signal lines for supplying the signal path 110 with the reference signal u1 generated within the electronic control unit 101 and for returning a transmitted reference signal u1' from the first signal path 110 to the electronic control unit 101 for evaluation.

By means of its transmission function, said first signal path 110 transforms the first reference signal u1 received at an input of said first signal path 110 into a transmitted reference signal u1' that is obtained at an output of said first signal path 110. Likewise, said second signal path 120 (Figure 1) receives at its input a second reference signal u2' and transforms said second reference signal u2' into a transmitted second reference signal u2'' available at an output of said second signal path 120.

In the present example, the transmission function of said second signal path 120 does not depend on the physical value to be measured by said sensor device 100, because the second signal path is completely integrated within the electronic control unit 101 and has no rain-detecting capacitor or the like.

The transmitted reference signals u1', u2'' so obtained are finally evaluated within evaluation means 130 which may comprise a microcontroller, a digital signal processor (DSP) or any other calculation means which are capable of comparing said transmitted reference signal u1', u2'' to each other, particularly in the sense of the per se known HALIOS principle.

The evaluation of said transmitted reference signals u1', u2'' within the evaluation means 130 is explained below with reference to Figure 2 which gives a more detailed diagram of an exemplary configuration of said evaluation means 130.

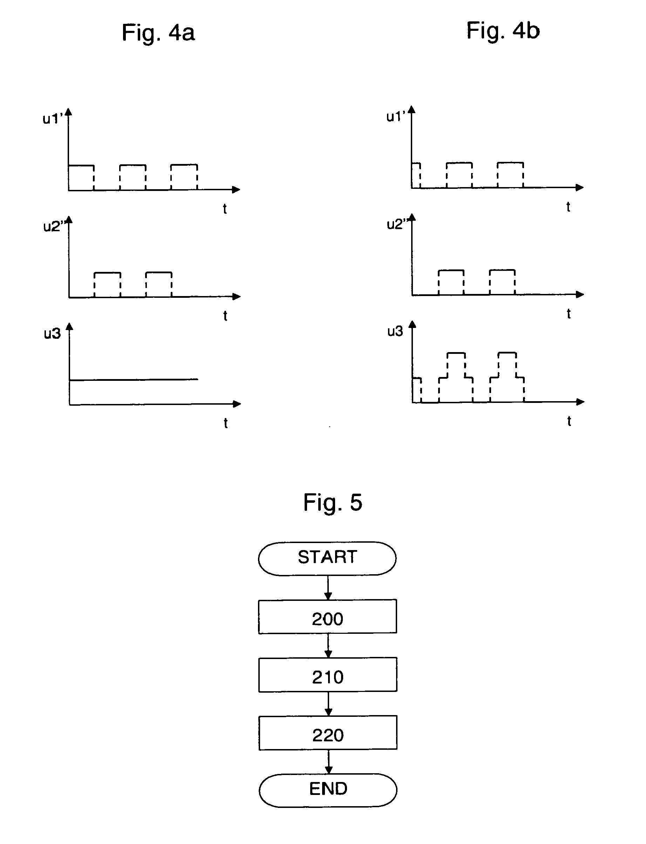

The transmitted reference signals u1' and u2'' are added by means of an adder 131 to form a sum signal u3. During a normal operation of said sensor device 100, i.e. when the sensor device 100 is calibrated and no rain drops are present to influence a nominal capacity of the capacitor integrated within said first signal path 110, said sum signal u3 has a constant value since said reference signals u1, u2 or the transmitted reference signals u1', u2'', respectively, differ in phase by exactly 180 degrees so that respective low/high levels of the signal u1' are each added to the respective high/low levels of the signal u2''. This situation is depicted in the exemplary diagrams of Figure 4a.

If rain drops are present on the windshield and thus the current capacity of the capacitor comprised within said first signal path 110 is different from its nominal capacity, i.e. the amplitude and/or the phase of said transmitted reference signal u1' are altered depending on the change in capacity. At the same time, since the transmission function of said second signal path 120 is independent of said physical value to be measured, the second reference signal u2'' does not change in the aforedescribed manner. This situation is depicted in the corresponding diagrams of Figure 4b, wherein it is to be noted that as an exemplary change of the transmitted reference signal u1' only a phase shift is shown, which does not necessarily correspond with the actual change of the windshield capacitor's capacitance but rather serves demonstration purposes.

As a consequence of the phase shift between the reference signals u1' and u2'', a sum signal u3 is obtained which is not constant but rather comprises frequency components of the reference signals.

Said sum signal u3 is amplified by the amplifier 132 (Figure 2) whereby an amplified sum signal u4 is obtained. The amplified sum signal u4 is after that filtered by a bandpass filter 133. The cutoff-frequencies of said bandpass filter 133 are chosen such that said bandpass filter 133 rejects signal frequencies other than those of the reference signals u1, u2.

The filtered signal u5 is finally demodulated by demodulator 134, and the demodulated signal u6 so obtained is analysed to derive the change of the capacitance due to the rain drops on the windshield capacitor.

In order to increase the flexibility of the described sensor device 100, a phase shifter 140 is provided which is capable of further influencing the phase of at least one of said reference signals u1, u2.

For instance, in the present example, said phase shifter 140 is capable of influencing the phase of said second reference signal u2. This enables to modify the phase of said second reference signal u2 or said second transmitted reference signal u2'', respectively.

The phase shifter 140 may e.g. be used to compensate any difference in phase apart from said 180 degrees nominal phase shift between said transmitted reference signals u1', u2'', which may e.g. be due to different signal line lengths or parasitic capacitive or inductive elements within said first signal path 110 or said signal path 120.

For example, different signal line lengths introduce a corresponding phase shift to the reference signal transmitted over said signal line and thereby violate the HALIOS principle since the nominal phase shift of 180 degrees of said transmitted first and second reference signals u1', u2'' is altered proportional to the difference in the signal line length.

In this case, the inventive phase shifter 140 may be used to correspondingly adapt the phase of e.g. said second reference signal u2 and thus establish the nominal phase shift of 180 degrees at the input of the evaluation means 130.

Advantageously, a current phase shift between said transmitted reference signals u1', u2'' may be evaluated by said evaluation means 130, and depending on the evaluated current phase shift, said phase shifter 140 may be controlled.

For instance, in a first step 200 of the inventive method (Figure 5), said current phase shift may be evaluated within a calibration phase of said sensor device 100, and if said phase shift is different from 180 degrees, in a next step 210 the inventive phase shifter 140 may be controlled accordingly to alter the phase of the reference signal u2 so as to establish a 180 degrees phase shift between the transmitted reference signals u1' and u2''. Finally, in step 220, the calibration phase is terminated and any future deviations from the demanded phase shift of 180 degrees are interpreted as changes of the capacitance of the first signal path 110 in response e.g. to rain drops accumulating on the windshield capacitor.

As described above, in contrast to the prior art HALIOS measurement configurations which require strict symmetry concerning the signal paths 110, 120, the inventive phase shifter 140 also enables to provide only said first signal path 110 with signal lines to a capacitor arranged in a windshield of a motor vehicle, while said second signal path 120 is realized by a comparatively short signal line on a printed circuit board of the electronic control unit 101 (Figure 3) of said sensor device 100. This difference in signal line length may easily be compensated for by the inventive phase shifter 140. Therefore, it is not necessary to provide the second signal path 120 with a signal line of the same length as said first signal path 110 thereby overcoming mounting and/or geometry restrictions of prior art systems.

Furthermore, accordingly there is no necessity to provide a complicated cable as within prior art systems for contacting further capacitor electrodes that may be arranged in said second signal path 120 within said prior art systems.

Thus, a more reliable sensor device 100 and a simplified production of said sensor device 100 is provided.

According to a very advantageous embodiment of the present invention, said phase shifter 140 (Figure 1) comprises an RC-network that has one or more resistive elements and one or more capacitive elements.

A first, very simple variant of the inventive phase shifter 140 provides for a constant phase shift which is chosen so as to correspond with a known, undesired phase shift resulting from different lengths of the transmission lines or other components of the signal paths 110, 120.

A more sophisticated variant of the inventive phase shifter 140 provides for at least one tuneable element such as a variable capacitor or resistor in order to dynamically influence the resulting phase shift. Such tuneable capacitive or resistive elements may e.g. be provided in form of a matrix having a plurality of elements with a constant capacity or resistance which may be interconnected via a controllable switch matrix in a plurality of different ways so as to establish different resulting capacitance or resistance values.

Apart from influencing the phase of said at least one reference signal, said inventive phase shifter 140 may also be configured to alter an amplitude of the reference signal u1, u2 to account for changes in an attenuation of the reference signals u1, u2, which may also be due to line lengths or the like.

Generally, it is also possible to employ a passive or active filter circuit as said inventive phase shifter 140 to influence both the amplitude and the phase of said at least one reference signal u1, u2.

An alternative embodiment proposes to provide a digitally controllable delay line within said phase shifter 140, which simplifies the control of said phase shifter 140 through a microcontroller or the like.

Yet another advantageous embodiment of the present invention is characterized in that said phase shifter 140 is integrated in said signal generator 105.

Apart from using capacitive elements within said signal paths 110, 120, it is also possible to provide for optical transmission sections which may e. g. comprise a light-emitting diode (LED) and a corresponding photodiode.

Depending on the physical value to be measured, further circuit elements or components may be employed to realize a respective transmission function of the corresponding signal path 110, 120 which depends on the physical value to be measured.

## Claims

1. Sensor device (100) for measuring a physical value, comprising a signal generator (105) for generating a first reference signal (u1) and a second reference signal (u2) that is phase shifted by 180 degrees with reference to said first reference signal, at least a first signal path (110) for transmitting said first reference signal (u1) and a second signal path (120) for transmitting said second reference signal (u2), wherein a transmission function of at least said first signal path (110) depends on said physical value, and evaluation means (130) for analysing respective transmitted reference signals (u1', u2'') obtained at an output of said first signal path (110) and said second signal path (120), **characterized by** a phase shifter (140) for further influencing the phase of at least one of said reference signals (u1, u2).

2. Sensor device (100) according to claim 1, **characterized in that** said phase shifter (140) comprises an RC-network having one or more resistive elements and one or more capacitive elements.

3. Sensor device (100) according to one of the preceding claims, **characterized in that** said phase shifter (140) comprises a digitally controllable delay line.

4. Sensor device (100) according to one of the preceding claims, **characterized in that** said phase shifter (140) is integrated in said signal generator (105).

5. Sensor device (100) according to one of the preceding claims, **characterized in that** at least one of said signal paths (110, 120) comprises a capacitive element a capacitance of which depends on said physical value.

6. Sensor device (100) according to one of the preceding claims, **characterized in that** at least one of said signal paths (110, 120) comprises an optical transmission section.

7. Sensor device (100) according to one of the preceding claims, **characterized in that** a transmission function of said second signal path (120) does not depend on said physical value.

8. Sensor device (100) according to one of the preceding claims, **characterized in that** said second signal path (120) is completely integrated within an electronic control unit (101) of said sensor device (100).

9. Sensor device (100) according to one of the preceding claims, **characterized in that** said signal generator (105) is configured to generate rectangular reference signals (u1, u2).

10. Method of operating a sensor device (100) for measuring a physical value, wherein a first reference signal (u1) is transmitted over a first signal path (110) and wherein a second reference signal (u2), which is phase shifted by 180 degrees with reference to said first reference signal (u1), is transmitted over a second signal path (120), wherein a transmission function of at least said first signal path (110) depends on said physical value, and wherein respective transmitted reference signals (u1', u2'') obtained at an output of said first signal path (110) and said second signal path (120) are analysed, **characterized by** further influencing the phase of at least one of said reference signals (u1, u2) by means of a phase shifter (140).

11. Method according to claim 10, **characterized by** influencing the phase of at least one of said reference signals (u1, u2) in order to attain a phase difference of 180 degrees between said transmitted reference signals (u1', u2'').

12. Method according to one of the claims 10 or 11, **characterized by** determining a current phase shift between said transmitted reference signals (u1', u2'').
